# EUROPEAN PATENT APPLICATION

(11) **EP 1 204 106 A2**
(43) Date of publication of application: **08.05.2002**
(21) Application number: 01309367.9
(22) Date of filing: 05.11.2001
(51) Int. Cl.: G11B 7/007

(54) **Optical recording medium, information recording apparatus, and information reproducing apparatus**

(30) Priority: 06.11.2000 JP 2000337582
(71) Applicant: Pioneer Corporation, Tokyo-to (JP)
(72) Inventor: Tateishi, Kiyoshi, c/o Pioneer Corporation, Tsurugashima-shi, Saitama-ken (JP)
(74) Representative: Haley, Stephen

(57) **Abstract**

In an optical recording medium having a plurality of recording layers of a double-spiral structure in which information is recorded on both of land tracks and groove tracks, the spiral of a first recording layer (1) is in the forward direction, the spiral of a second recording layer (2) is in the backward direction, first information is recorded on one of the land track (1B) and the groove track (1A) of the first recording layer (1) in the direction from the inner periphery toward the outer periphery of the optical recording medium, and second information subsequent to the first information is recorded on one of the land track (2B) and the groove track (2A) of the second recording layer (2) in the direction from the outer periphery toward the inner periphery of the optical recording medium.

## Description

The present invention relates to writable optical recording media having a plurality of recording layers.

As a recordable optical recording medium, a DVD-RAM disk is known. This disk takes a so-called land groove single spiral structure having a single recording layer, and by off-setting grooves by one track once each rotation, lands and grooves are alternately connected to form one spiral. By tracing this spiral, all the lands and grooves can be successively traced. Therefore, the physical address is updated alternately for the land track and the groove track.

However, since the above-described DVD-RAM has a single recording layer, to increase the recording capacity, a plurality of recording layers must be provided. Besides, in the land groove single spiral structure, since the land track and the groove track must be connected each rotation, when the disk is manufactured, the grooves must be accurately shifted by one track each rotation, so the manufacture of the disk is not easy. Besides, when information is recorded/reproduced, the land track and the groove track are switched every time the disk makes one rotation, the tracking polarity must be reversed at an accurate timing each rotation, so the tracking servo is not easy. Therefore, in case of providing a plurality of recording layers taking merely the land groove single spiral structure, it is expected that the same problem above-mentioned is caused.

It is an object of the present invention to provide writable optical recording media in which the recording capacity can be increased, the manufacture is easy, and reproduction can be made easy.

An optical recording medium of the present invention is an optical recording medium having a plurality of recording layers of a double-spiral structure in which information is recorded on both of land tracks and groove tracks, characterized in that a spiral of a first recording layer (1) is in a forward direction, a spiral of a second recording layer (2) is in a backward direction, and first information is recorded on one of a land track (1B) and a groove track (1A) of the first recording layer (1) in the direction from an inner periphery toward an outer periphery of the optical recording medium, and second information subsequent to the first information is recorded on one of a land track (2B) and a groove track (2A) of the second recording layer (2) in the direction from the outer periphery toward the inner periphery of the optical recording medium.

According to this optical recording medium, the spiral structure of the first recording layer included in the plurality of recording layers and the spiral structure of the second recording layer included in the plurality of recording layers are reverse in spiral direction to each other. In the first recording layer, the first information is recorded on one of the land track and the groove track in the direction from the inner periphery toward the outer periphery of the optical recording medium. In the second recording layer, the second information subsequent to the first information is recorded on one of the land track and the groove track in the direction from the outer periphery toward the inner periphery of the optical recording medium. Therefore, only by switching the focus of a pickup while the optical recording medium is being rotated in the same direction, the second information can be read out subsequently to the first information and the pickup need not be largely moved radially. Thus the first information and the second information can be read out continuously. Besides, because of the double-spiral structure, the optical recording medium can be manufactured with ease. Further, since the tracking polarity need not frequently be switched, the reproduction becomes easy.

An optical recording medium of the present invention is an optical recording medium having a plurality of recording layers of a double-spiral structure in which information is recorded on both of land tracks and groove tracks, characterized in that a spiral of a first recording layer (1) is in a forward direction, a spiral of a second recording layer (2) is in a backward direction, and first information is recorded on one of a land track (1B) and a groove track (1A) of the first recording layer (1) in the direction from an outer periphery toward an inner periphery of the optical recording medium, and second information subsequent to the first information is recorded on one of a land track (2B) and a groove track (2A) of the second recording layer (2) in the direction from the inner periphery toward the outer periphery of the optical recording medium.

According to this optical recording medium, the spiral structure of the first recording layer included in the plurality of recording layers and the spiral structure of the second recording layer included in the plurality of recording layers are reverse in spiral direction to each other. In the first recording layer, the first information is recorded on one of the land track and the groove track in the direction from the outer periphery toward the inner periphery of the optical recording medium. In the second recording layer, the second information subsequent to the first information is recorded on one of the land track and the groove track in the direction from the inner periphery toward the outer periphery of the optical recording medium. Therefore, only by switching the focus of a pickup while the optical recording medium is being rotated in the same direction, the second information can be read out subsequently to the first information and the pickup need not be largely moved radially. Thus the first information and the second information can be read out continuously. Besides, because of the double-spiral structure, the optical recording medium can be manufactured with ease. Further, since the tracking polarity need not frequently be switched, the reproduction becomes easy.

Third information subsequent to the second information may be recorded on one of the land track (1B) and the groove track (1A) of the first recording layer (1) on which the first information is not recorded, and fourth information subsequent to the third information may be recorded on one of the land track (2B) and the groove track (2A) of the second recording layer (2) on which the second information is not recorded.

The first information may be recorded on the land track of the first recording layer, and the second information may be recorded on the land track of the second recording layer. In this case, upon a focus jump of the focus of the pickup from the land track of the first recording layer to the land track of the second recording layer, the tracking polarity need not be switched.

The first information may be recorded on the groove track of the first recording layer, and the second information may be recorded on the groove track of the second recording layer. In this case, upon a focus jump of the focus of the pickup from the groove track of the first recording layer to the groove track of the second recording layer, the tracking polarity need not be switched.

Either of the first recording layer (21, 31) and the second recording layer (22, 32) may have been divided into N zones (zone 1 to zone N) from the inner periphery toward the outer periphery of said optical recording medium, and first information may be recorded on one of the land track (21B, 31B) and the groove track (21A, 31A) in zone n (n: a natural number not less than one and not more than N) of the first recording layer (21, 31) in the direction from the inner periphery toward the outer periphery of the optical recording medium, and second information subsequent to the first information may be recorded on one of the land track (22B, 32B) and the groove track (22A, 32A) in zone n of the second recording layer (22, 32) in the direction from the outer periphery toward the inner periphery of the optical recording medium.

In this case, only by switching the focus of the pickup while the optical recording medium is being rotated in the same direction, the second information recorded in zone n of the second recording layer can be read out subsequently to the first information recorded in zone n of the first recording layer and the pickup need not be largely moved radially. Thus the first information and the second information can be read out continuously.

An outer periphery end of zone n of the second recording layer (32) may be located nearer to the outer periphery of the optical recording medium than an outer periphery end of zone n of the first recording layer (31). In this case, upon a focus jump from the first recording layer to the second recording layer, the focus of the pickup can surely be moved to zone n of the second recording layer.

Either of the first recording layer and the second recording layer may have been divided into N zones (zone 1 to zone N) from the inner periphery toward the outer periphery of said optical recording medium, and first information may be recorded on one of the land track and the groove track in zone n (n: a natural number not less than one and not more than N) of the first recording layer in the direction from the outer periphery toward the inner periphery of the optical recording medium, and second information subsequent to the first information may be recorded on one of the land track and the groove track in zone n of the second recording layer (22, 32) in the direction from the inner periphery toward the outer periphery of the optical recording medium.

In this case, only by switching the focus of the pickup while the optical recording medium is being rotated in the same direction, the second information recorded in zone n of the second recording layer can be read out subsequently to the first information recorded in zone n of the first recording layer and the pickup need not be largely moved radially. Thus the first information and the second information can be read out continuously.

An inner periphery end of zone n of the second recording layer may be located nearer to the inner periphery of the optical recording medium than an inner periphery end of zone n of the first recording layer. In this case, upon a focus jump from the first recording layer to the second recording layer, the focus of the pickup can surely be moved to zone n of the second recording layer.

The first information may be recorded on the land track in zone n of the first recording layer, and the second information may be recorded on the land track in zone n of the second recording layer. In this case, upon a focus jump of the focus of the pickup from the land track of the first recording layer to the land track of the second recording layer, the tracking polarity need not be switched.

The first information may be recorded on the groove track in zone n of the first recording layer, and the second information may be recorded on the groove track in zone n of the second recording layer. In this case, upon a focus jump of the focus of the pickup from the groove track of the first recording layer to the groove track of the second recording layer, the tracking polarity need not be switched.

An optical recording medium of the present invention is an optical recording medium having a plurality of recording layers of a double-spiral structure in which information is recorded on both of land tracks and groove tracks, characterized in that at least a first recording layer (1), a second recording layer (2), a third recording layer (3), and a fourth recording layer (4) are provided as said recording layers, a first recording direction from an inner periphery toward an outer periphery of the optical recording medium and a second recording direction from the outer periphery toward the inner periphery of the optical recording medium are defined as the order of recording information, the recording direction of the first recording layer (1) and the third recording layer (3) is one of the first recording direction and the second recording direction, the recording direction of the second recording layer (2) and the fourth recording layer (4) is the other of the first recording direction and the second recording direction, and physical addresses are allocated in the order of one of a land track (1B) and a groove track (1A) of the first recording layer (1), one of a land track (2B) and a groove track (2A) of the second recording layer (2), the other of the land track (1B) and the groove track (1A) of the first recording layer (1), the other of the land track (2B) and the groove track (2A) of the second recording layer (2), one of a land track (3B) and a groove track (3A) of the third recording layer (3), one of a land track (4B) and a groove track (4A) of the fourth recording layer (4), the other of the land track (3B) and the groove track (3A) of the third recording layer (3), and the other of the land track (4B) and the groove track (4A) of the fourth recording layer (4).

According to this optical recording medium, only by switching the focus of the pickup while the optical recording medium is being rotated in the same direction, information recorded in the first to fourth recording layers can be reproduced and the pickup need not be largely moved radially. Thus the information recorded in the first to fourth recording layers can be read out continuously. Besides, because of the double-spiral structure, the optical recording medium can be manufactured with ease. Further, since the tracking polarity need not frequently be switched, the reproduction becomes easy.

An information recording apparatus of the present invention is an information recording apparatus for recording information onto an optical recording medium having at least a first recording layer and a second recording layer of a double-spiral structure in which information is recorded on both of land tracks and groove tracks, characterized in that a first recording direction from an inner periphery toward an outer periphery of the optical recording medium and a second recording direction from the outer periphery toward the inner periphery of the optical recording medium are defined as the order of recording information, information is recorded in said first recording layer in one of said first recording direction and said second recording direction, information is recorded in said second recording layer in the other of said first recording direction and said second recording direction, and physical addresses for recording are allocated in the order of one of a land track and a groove track of said first recording layer, one of a land track and a groove track of said second recording layer, the other of the land track and the groove track of said first recording layer, and the other of the land track and the groove track of said second recording layer.

According to this information recording apparatus, by making the recording directions for the first recording layer and the second recording layer opposite to each other, and recording information alternately into the first recording layer and the second recording layer, the information can be recorded in the order of physical addresses while the optical recording medium is being rotated in one direction.

An information reproducing apparatus of the present invention is an information reproducing apparatus for reproducing information from an optical recording medium having at least a first recording layer (1) and a second recording layer (2) of a double-spiral structure in which information is recorded on both of land tracks and groove tracks, characterized in that a first reproducing direction from an inner periphery toward an outer periphery of the optical recording medium and a second reproducing direction from the outer periphery toward the inner periphery of the optical recording medium are defined as the order of reproducing information, information is reproduced from the first recording layer (1) in one of the first reproducing direction and the second reproducing direction, information is reproduced from the second recording layer (2) in the other of the first reproducing direction and the second reproducing direction, and information is reproduced following physical addresses allocated in the order of one of a land track (1B) and a groove track (1A) of the first recording layer (1), one of a land track (2B) and a groove track (2A) of the second recording layer (2), the other of the land track (1B) and the groove track (1A) of the first recording layer (1), and the other of the land track (2B) and the groove track (2A) of the second recording layer (2).

According to this information reproducing apparatus, since the reproducing directions of the first recording layer and the second recording layer are reversed to each other, and information is reproduced alternately from the first recording layer and the second recording layer, the information can be reproduced in the order of physical addresses while the optical recording medium is being rotated in one direction.

An information reproducing apparatus of the present invention is an information reproducing apparatus for reproducing information from an optical recording medium (300) having at least a first recording layer (21) and a second recording layer (22) of a double-spiral structure in which information is recorded on both of land tracks and groove tracks, characterized in that a spiral of the first recording layer (21) is in a forward direction, a spiral of the second recording layer (22) is in a backward direction, information has been recorded in the first recording layer (21) in the direction from an inner periphery toward an outer periphery of the optical recording medium (300), information has been recorded in the second recording layer (22) in the direction from the outer periphery toward the inner periphery of the optical recording medium (300), either of the first recording layer (21) and the second recording layer (22) has been divided into N zones (zone 1 to zone N) from the inner periphery toward the outer periphery of the optical recording medium (300), first information has been recorded on one of a land track (21B) and a groove track (21A) in zone n (n: a natural number not less than one and not more than N) of the first recording layer (21), and second information subsequent to the first information has been recorded on one of a land track (22B) and a groove track (22A) in zone n of the second recording layer (22), and a driving device (55) is provided for driving a pickup (51) so that the first information is reproduced following physical addresses, the focus of the pickup (51) is slid by a predetermined amount in the direction toward the outer or inner periphery of the optical recording medium (300) with a focus jump from the first recording layer (21) to the second recording layer (22), and then the second information is reproduced following physical addresses.

According to this information reproducing apparatus, upon a focus jump, in the same zone n of the first recording layer and the second recording layer, the boundary position to another zone is shifted. Thus there is no possibility of focusing another zone upon a focus jump at the boundary position, so the focus of the pickup can surely be moved to the same zone n of the second recording layer (22). Therefore, in case of recording/reproducing at rotational speeds varying from zone to zone, since focusing the same zone occurs after a focus jump at the boundary position of the zone, the rotational speed need not be changed and address reproduction becomes easy.

An information reproducing apparatus of the present invention is an information reproducing apparatus for reproducing information from an optical recording medium (300) having at least a first recording layer (21) and a second recording layer (22) of a double-spiral structure in which information is recorded on both of land tracks and groove tracks, characterized in that a spiral of the first recording layer (21) is in a forward direction, a spiral of the second recording layer (22) is in a backward direction, information has been recorded in the first recording layer (21) in the direction from an outer periphery toward an inner periphery of the optical recording medium (300), information has been recorded in the second recording layer (22) in the direction from the inner periphery toward the outer periphery of the optical recording medium (300), either of the first recording layer (21) and the second recording layer (22) has been divided into N zones (zone 1 to zone N) from the inner periphery toward the outer periphery of the optical recording medium (300), first information has been recorded on one of a land track (21B) and a groove track (21A) in zone n (n: a natural number not less than one and not more than N) of the first recording layer (21), and second information subsequent to the first information has been recorded on one of a land track (22B) and a groove track (22A) in zone n of the second recording layer (22), and a driving device (55) is provided for driving a pickup (51) so that the first information is reproduced following physical addresses, the focus of the pickup (51) is slid by a predetermined amount in the direction toward the inner or outer periphery of the optical recording medium (300) with a focus jump from the first recording layer (21) to the second recording layer (22), and then the second information is reproduced following physical addresses.

According to this information reproducing apparatus, upon a focus jump, in the same zone n of the first recording layer and the second recording layer, the boundary position to another zone is shifted. Thus there is no possibility of focusing another zone upon a focus jump at the boundary position, so the focus of the pickup can surely be moved to the same zone n of the second recording layer (22). Therefore, in case of recording/reproducing at rotational speeds varying from zone to zone, since focusing the same zone occurs after a focus jump at the boundary position of the zone, the rotational speed need not be changed and address reproduction becomes easy.

In the Drawings;
FIG. 1 is a view typically showing the arrangement of recording layers of an optical disk as an optical recording medium of the first embodiment;
FIGS. 2A to 2D are views typically showing the construction of each recording layer;
FIG. 3 is a block diagram showing the construction of an information recording/reproducing apparatus;
FIG. 4 is a view typically showing the arrangement of recording layers of an optical disk as an optical recording medium of the second embodiment;
FIG. 5 is a view typically showing the arrangement of recording layers of an optical disk as an optical recording medium of the third embodiment; and
FIG. 6 is a view typically showing the arrangement of recording layers of an optical disk as an optical recording medium of the fourth embodiment.

### - First Embodiment-

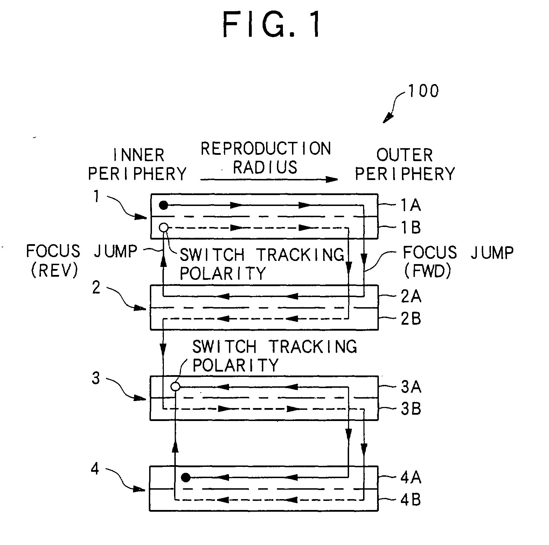

The first embodiment of an optical recording medium of the present invention will be described below with reference to FIGS. 1 to 3.

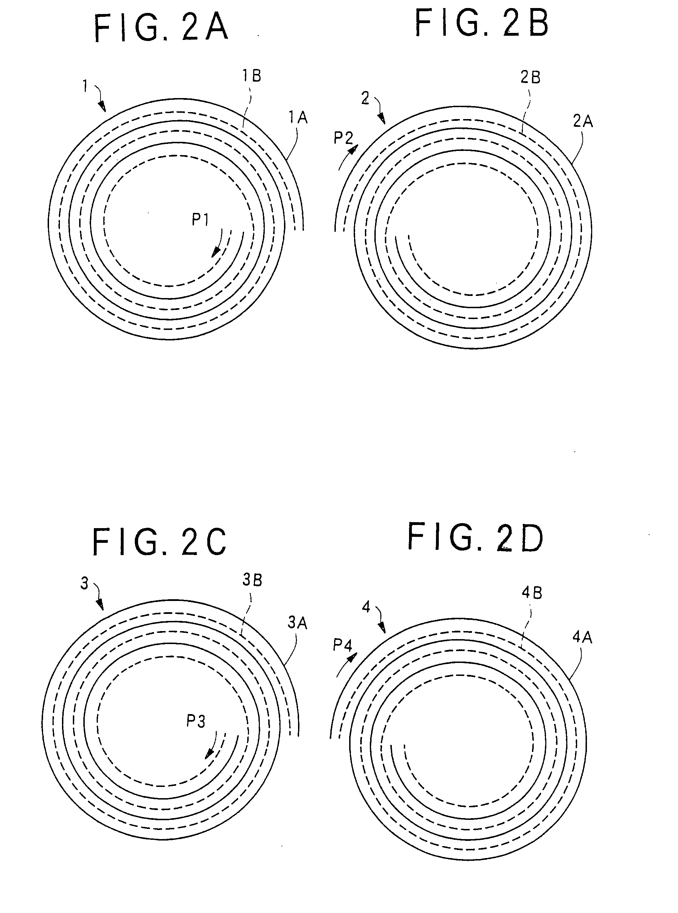

FIG. 1 is a view typically showing the arrangement of recording layers of an optical disk as an optical recording medium of the first embodiment, and FIGS. 2A to 2B are views typically showing the construction of each recording layer. As shown in FIG. 1, an optical disk 100 is provided with a first recording layer 1, a second recording layer 2, a third recording layer 3, and a fourth recording layer 4, which are sequentially laminated. A groove track 1A and a land track 1B are spirally formed on the first recording layer 1. A groove track 2A and a land track 2B are spirally formed on the second recording layer 2. A groove track 3A and a land track 3B are spirally formed on the third recording layer 3. A groove track 4A and a land track 4B are spirally formed on the fourth recording layer 4. That is, each recording layer has a double-spiral structure in which information can be recorded on both the groove track and the land track.

As shown in FIGS. 2A and 2C, each of the first recording layer 1 and the third recording layer 3 takes a spiral structure in the forward direction. As shown in FIGS. 2B and 2D, each of the second recording layer 2 and the fourth recording layer 4 takes a spiral structure in the backward direction. In FIGS. 2A to 2D, note that the forward direction and the backward direction of the spirals are determined for convenience' sake. Forward or backward of the spirals merely means that they are in the reverse direction to each other. The forward direction or backward direction of the spiral is not to define an absolute direction.

As shown in FIGS. 1 and 2A, on each of the groove track 1A and the land track 1B of the first recording layer 1, information is recorded in the direction from the inner periphery of the optical disk 100 toward the outer periphery thereof. As shown in FIGS. 1 and 2B, on each of the groove track 2A and the land track 2B of the second recording layer 2, information is recorded in the direction from the outer periphery of the optical disk 100 toward the inner periphery thereof. As shown in FIGS. 1 and 2C, on each of the groove track 3A and the land track 3B of the third recording layer 3, information is recorded in the direction from the inner periphery of the optical disk 100 toward the outer periphery thereof. As shown in FIGS. 1 and 2D, on each of the groove track 4A and the land track 4B of the fourth recording layer 4, information is recorded in the direction from the outer periphery of the optical disk 100 toward the inner periphery thereof. Arrows P1 to P4 shown in FIGS. 2A to 2D indicate the recording directions (reproduction directions) of the first to fourth recording layers, respectively.

As shown in FIG. 1, the physical addresses on the optical disk 100 are allocated in the order of the groove track 1A of the first recording layer 1, the groove track 2A of the second recording layer 2, the land track 1B of the first recording layer 1, the land track 2B of the second recording layer 2, the land track 3B of the third recording layer 3, the land track 4B of the fourth recording layer 4, the groove track 3A of the third recording layer 3, and the groove track 4A of the fourth recording layer 4.

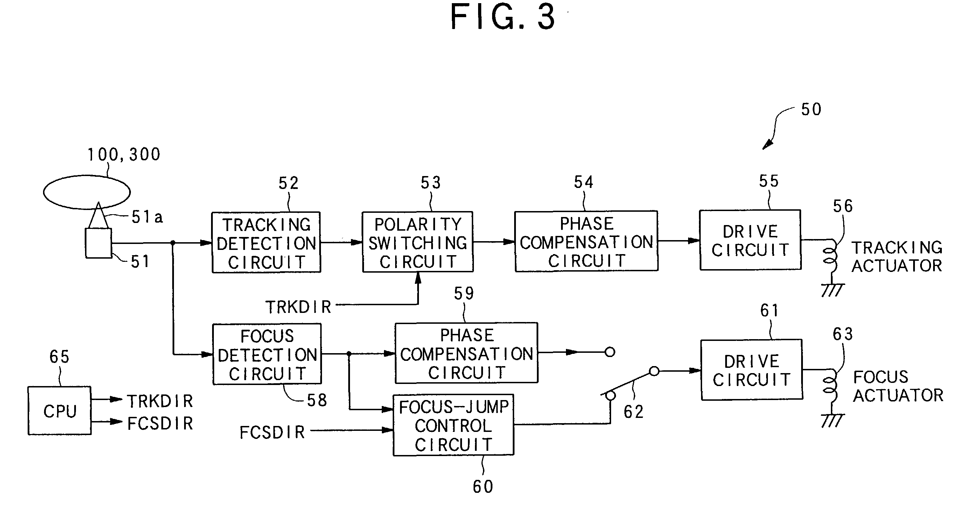

FIG. 3 is a block diagram showing the construction of an information recording/reproducing apparatus 50 for recording information on the optical disk 100 and reproducing information recorded on the optical disk 100. As shown in FIG. 3, the information recording/reproducing apparatus 50 includes a pickup 51 for writing information into each recording layer of the optical disk 100 with a laser light 51A and reading out information in each recording layer; a tracking detection circuit 52 for detecting a tracking deviation on the basis of information from the pickup 51; a polarity switching circuit 53 for switching the tracking polarity in accordance with switching of the read track between the groove track and the land track; a phase compensation circuit 54 for shaping the signal output from the tracking detection circuit 52; a drive circuit 55 that receives a signal from the phase compensation circuit 54; a tracking actuator 56 that receives a signal from the drive circuit 55 to drive the pickup 51 and thereby adjust tracking; a focus detection circuit 58 for detecting a focus deviation on the basis of information from the pickup 51; a phase compensation circuit 59 for shaping the signal of the focus detection circuit 58; a focus-jump control circuit 60 for controlling focus jump; a drive circuit 61 that receives a signal from the phase compensation circuit 59 or the focus-jump control circuit 60; a selection switch 62 for selecting one of the output signals of the phase compensation circuit 59 and the focus-jump control circuit 60 as a signal to be input to the drive circuit 61; a focus actuator 63 that receives a signal from the drive circuit 61 to adjust the focus of the pickup 51; and a CPU 65 for controlling each part of the information reproducing apparatus 50.

As shown in FIG. 3, the CPU 65 sends out a command toward the polarity switching circuit 53 for switching the tracking polarity. Besides, the CPU 65 sends out a focus-jump command toward the focus-jump control circuit 60 for jumping the focus of the laser light to another recording layer.

Next, a method for reading out information recorded on the optical disk 100 will be described.

In case of reading out information recorded on the optical disk 100, in the order of the above-described physical addresses, the optical disk 100 is rotated counterclockwise in each of FIGS. 2A to 2D. In this state, the pickup is moved from the inner periphery of the optical disk 100 toward the outer periphery thereof, thereby reading out information recorded on the groove track 1A of the first recording layer 1, in a predetermined order. After this, the optical disk 100 is kept rotating in the same direction.

Next, the focus of the pickup is moved by a focus jump from the first recording layer 1 to the second recording layer 2. The pickup is then moved from the outer periphery of the optical disk 100 toward the inner periphery thereof, thereby reading out information recorded on the groove track 2A of the second recording layer 2, in a predetermined order.

Next, the focus of the pickup is moved by a focus jump from the second recording layer 2 to the first recording layer 1 and the tracking polarity is switched. The pickup is then moved from the inner periphery of the optical disk 100 toward the outer periphery thereof, thereby reading out information recorded on the land track 1B of the first recording layer 1, in a predetermined order.

Next, the focus of the pickup is moved by a focus jump from the first recording layer 1 to the second recording layer 2. The pickup is then moved from the outer periphery of the optical disk 100 toward the inner periphery thereof, thereby reading out information recorded on the land track 2B of the second recording layer 2, in a predetermined order.

Next, the focus of the pickup is moved by a focus jump from the second recording layer 2 to the third recording layer 3. The pickup is then moved from the inner periphery of the optical disk 100 toward the outer periphery thereof, thereby reading out information recorded on the land track 3B of the third recording layer 3, in a predetermined order.

Next, the focus of the pickup is moved by a focus jump from the third recording layer 3 to the fourth recording layer 4. The pickup is then moved from the outer periphery of the optical disk 100 toward the inner periphery thereof, thereby reading out information recorded on the land track 4B of the fourth recording layer 4, in a predetermined order.

Next, the focus of the pickup is moved by a focus jump from the fourth recording layer 4 to the third recording layer 3 and the tracking polarity is switched. The pickup is then moved from the inner periphery of the optical disk 100 toward the outer periphery thereof, thereby reading out information recorded on the groove track 3A of the third recording layer 3, in a predetermined order.

Next, the focus of the pickup is moved by a focus jump from the third recording layer 3 to the fourth recording layer 4. The pickup is then moved from the outer periphery of the optical disk 100 toward the inner periphery thereof, thereby reading out information recorded on the groove track 4A of the fourth recording layer 4, in a predetermined order.

As described above, information recorded on the groove tracks and the land tracks of the first to fourth recording layers can be read out in the order of the physical addresses by the manner that the pickup is moved relatively to the disk and radially of the disk while the optical disk 100 is being rotated in the same direction. Besides, since the direction from the inner periphery of the optical disk 100 toward the outer periphery thereof and the direction from the outer periphery toward the inner periphery are repeated in the recording directions of the tracks in the order of the physical addresses, the pickup needs not to be moved radially of the optical disk 100 largely for a short time, and only by tracing the tracks in order, the read track can be switched by a focus jump. Besides, by determining the physical addresses so that the groove tracks or the land tracks are as continuous as possible, the number of times of switching the tracking polarity upon switching the read track can be reduced. Further, since the optical disk 100 has the recording layers of the double-spiral structure, the tracking polarity needs not to be switched every time the disk 100 makes one rotation.

Besides, by relatively moving the pickup 51 radially of the disk while the optical disk 100 is being rotated in the same direction, and applying a laser light at predetermined timings, the information can be recorded in the order in accordance with the physical addresses, on the groove tracks and the land tracks of the first to fourth recording layers.

### -Second Embodiment-

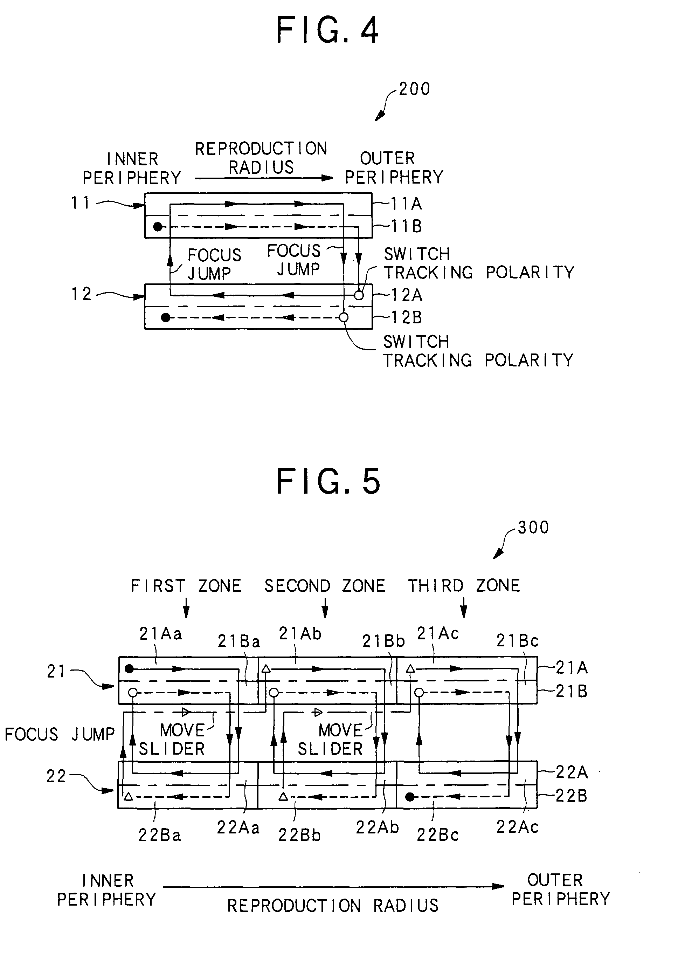

The second embodiment of an optical recording medium of the present invention will be described below with reference to FIG. 4.

FIG. 4 is a view typically showing the arrangement of recording layers of an optical disk as an optical recording medium of the second embodiment. As shown in FIG. 4, an optical disk 200 includes a first recording layer 11 and a second recording layer 12 laminated with each other. A groove track 11A and a land track 11B are spirally formed on the first recording layer 11 and a groove track 12A and a land track 12B are spirally formed on the second recording layer 12. That is, each recording layer has a double-spiral structure in which information can be recorded on both the groove track and the land track.

The first recording layer 11 takes a spiral structure in the forward direction and the second recording layer 12 takes a spiral structure in the backward direction. Like the first embodiment, forward or backward of the spirals merely means that they are in the reverse direction to each other.

On each of the groove track 11A and the land track 11B of the first recording layer 11, information is recorded in the direction from the inner periphery of the optical disk 200 toward the outer periphery thereof. On each of the groove track 12A and the land track 12B of the second recording layer 12, information is recorded in the direction from the outer periphery of the optical disk 200 toward the inner periphery thereof.

The physical addresses on the optical disk 200 are allocated in the order of the land track 11B of the first recording layer 11, the groove track 12A of the second recording layer 12, the groove track 11A of the first recording layer 11, and the land track 12B of the second recording layer 12.

Next, a method for reading out information recorded on the optical disk 200 will be described.

In case of reading out information recorded on the optical disk 200, in the order of the above-described physical addresses, the optical disk 200 is rotated in a certain direction. In this state, the pickup is moved from the inner periphery of the optical disk 200 toward the outer periphery thereof, thereby reading out information recorded on the land track 11B of the first recording layer 11, in a predetermined order. After this, the optical disk 200 is kept rotating in the same direction.

Next, the focus of the pickup is moved by a focus jump from the first recording layer 11 to the second recording layer 12 and the tracking polarity is switched. The pickup is then moved from the outer periphery of the optical disk 200 toward the inner periphery thereof, thereby reading out information recorded on the groove track 12A of the second recording layer 12, in a predetermined order.

Next, the focus of the pickup is moved by a focus jump from the second recording layer 12 to the first recording layer 11. The pickup is then moved from the inner periphery of the optical disk 200 toward the outer periphery thereof, thereby reading out information recorded on the groove track 11A of the first recording layer 11, in a predetermined order.

Next, the focus of the pickup is moved by a focus jump from the first recording layer 11 to the second recording layer 12 and the tracking polarity is switched. The pickup is then moved from the outer periphery of the optical disk 200 toward the inner periphery thereof, thereby reading out information recorded on the land track 12B of the second recording layer 12, in a predetermined order.

As described above, information recorded on the groove tracks and the land tracks of the first recording layer 11 and the second recording layer 12 can be read out in the order of the physical addresses by the manner that the pickup is moved relatively to the disk and radially of the disk while the optical disk 200 is being rotated in the same direction. Besides, since the direction from the inner periphery of the optical disk 200 toward the outer periphery thereof and the direction from the outer periphery toward the inner periphery are repeated in the recording directions of the tracks in the order of the physical addresses, the pickup needs not to be moved radially of the optical disk 200 largely for a short time, and the read track can be switched by a focus jump. Besides, by determining the physical addresses so that the groove tracks or the land tracks are as continuous as possible, the number of times of switching the tracking polarity upon switching the read track can be reduced.

Further, since the optical disk 200 has the recording layers of the double-spiral structure, the tracking polarity needs not to be switched every time the disk 200 makes one rotation.

Besides, by relatively moving the pickup 51 radially of the disk while the optical disk 200 is being rotated in the same direction, and applying a laser light at predetermined timings, the information can be recorded in the order in accordance with the physical addresses, on the groove tracks and the land tracks of the first recording layer 11 and the second recording layer 12.

### -Third Embodiment-

The third embodiment of an optical recording medium of the present invention will be described below with reference to FIG. 5.

FIG. 5 is a view typically showing the arrangement of recording layers of an optical disk as an optical recording medium of the third embodiment. As shown in FIG. 5, an optical disk 300 includes a first recording layer 21 and a second recording layer 22 laminated with each other. A groove track 21A and a land track 21B are spirally formed on the first recording layer 21 and a groove track 22A and a land track 22B are spirally formed on the second recording layer 22. That is, each recording layer has a double-spiral structure in which information can be recorded on both the groove track and the land track.

The first recording layer 21 takes a spiral structure in the forward direction and the second recording layer 22 takes a spiral structure in the backward direction. Like the first and second embodiments, the forward direction and the backward direction of the spirals are determined for convenience' sake, and forward or backward of the spirals merely means that they are in the reverse direction to each other.

As shown in FIG. 5, the optical disk 300 is divided into three zones. The groove track 21A of the first recording layer 21 is divided into a first zone 21Aa, a second zone 21Ab, and a third zone 21Ac. The land track 21B of the first recording layer 21 is divided into a first zone 21Ba, a second zone 21Bb, and a third zone 21Bc. The groove track 22A of the second recording layer 22 is divided into a first zone 22Aa, a second zone 22Ab, and a third zone 22Ac. The land track 22B of the second recording layer 22 is divided into a first zone 22Ba, a second zone 22Bb, and a third zone 22Bc.

The physical addresses of the first zone are allocated in the order of the first zone 21Aa of the groove track 21A of the first recording layer 21, the first zone 22Aa of the groove track 22A of the second recording layer 22, the first zone 21Ba of the land track 21B of the first recording layer 21, and the first zone 22Ba of the land track 22B of the second recording layer 22.

The physical addresses of the second zone are allocated in the order of the second zone 21Ab of the groove track 21A of the first recording layer 21, the second zone 22Ab of the groove track 22A of the second recording layer 22, the second zone 21Bb of the land track 21B of the first recording layer 21, and the second zone 22Bb of the land track 22B of the second recording layer 22.

The physical addresses of the third zone are allocated in the order of the third zone 21Ac of the groove track 21A of the first recording layer 21, the third zone 22Ac of the groove track 22A of the second recording layer 22, the third zone 21Bc of the land track 21B of the first recording layer 21, and the third zone 22Bc of the land track 22B of the second recording layer 22.

On each zone of the groove track 21A and the land track 21B of the first recording layer 21, information is recorded in the direction from the inner periphery of the optical disk 300 toward the outer periphery thereof. On each zone of the groove track 22A and the land track 22B of the second recording layer 22, information is recorded in the direction from the outer periphery of the optical disk 300 toward the inner periphery thereof.

Next, a method for reading out information recorded on the optical disk 300 will be described.

The optical disk 300 is rotated in a certain direction. In this state, the pickup is moved from the inner periphery of the optical disk 300 toward the outer periphery thereof, thereby reading out information recorded on the first zone 21Aa of the groove track 21A, in a predetermined order. After this, the optical disk 300 is kept rotating in the same direction.

Next, the focus of the pickup is moved by a focus jump from the first recording layer 21 to the second recording layer 22. The pickup is then moved toward the inner periphery of the optical disk 300, thereby reading out information recorded on the first zone 22Aa of the groove track 22A, in a predetermined order.

Next, the focus of the pickup is moved by a focus jump from the second recording layer 22 to the first recording layer 21 and the tracking polarity is switched. The pickup is then moved toward the outer periphery of the optical disk 300, thereby reading out information recorded on the first zone 21Ba of the land track 21B, in a predetermined order.

Next, the focus of the pickup is moved by a focus jump from the first recording layer 21 to the second recording layer 22. The pickup is then moved toward the inner periphery of the optical disk 300, thereby reading out information recorded on the first zone 22Ba of the land track 22B, in a predetermined order.

After information of the first zone of each track is read out as described above, the pickup is driven to be slid toward the outer periphery of the optical disk 300 and the focus of the pickup is moved by a focus jump from the second recording layer 22 to the first recording layer 21. After this, information recorded on the second zone and the third zone is read out by following the same procedure as that for the first zone.

As described above, information recorded on the groove tracks and the land tracks of the first recording layer 21 and the second recording layer 22 can be read out in the order of the physical addresses by the manner that the pickup is moved relatively to the disk and radially of the disk while the optical disk 300 is being rotated in the same direction. Besides, since the direction from the inner periphery of the optical disk 300 toward the outer periphery thereof and the direction from the outer periphery toward the inner periphery are repeated in the recording directions of the tracks in the order of the physical addresses, the pickup scarcely needs to be moved radially of the optical disk 300, and the read track can be switched by a focus jump. Besides, by determining the physical addresses so that the groove tracks or the land tracks are as continuous as possible, the number of times of switching the tracking polarity upon switching the read track can be reduced.

Further, since the optical disk 300 has the recording layers of the double-spiral structure, the tracking polarity need not frequently be switched each rotation.

Besides, by relatively moving the pickup radially of the disk while the optical disk 300 is being rotated in the same direction, the information can be recorded in the order in accordance with the physical addresses, on the groove tracks and the land tracks of the first recording layer 21 and the second recording layer 22.

FIG. 5 shows an example in which the optical disk is divided into three zones. But, the number of zones is not limited to this example. For example, the optical disk may be divided into several tens or a hundred or more zones.

In the third embodiment, information is recorded on the first recording layer from the inner periphery of the disk toward the outer periphery thereof, and information is recorded on the second recording layer from the outer periphery toward the inner periphery. But, for example, it is also possible that information is recorded on the first recording layer from the outer periphery toward the inner periphery, and information is recorded on the second recording layer from the inner periphery toward the outer periphery, and the order of the physical addresses allocated to the respective tracks is the same as that of the third embodiment.

### -Fourth Embodiment-

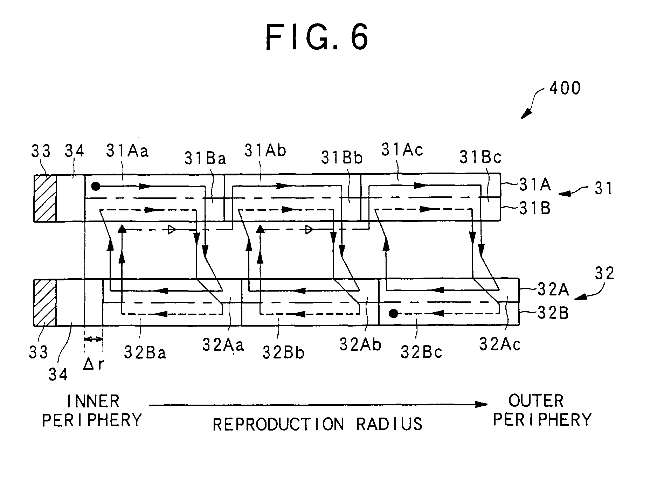

The fourth embodiment of an optical recording medium of the present invention will be described below with reference to FIG. 6.

FIG. 6 is a view typically showing the arrangement of recording layers of an optical disk as an optical recording medium of the fourth embodiment. As shown in FIG. 6, an optical disk 400 includes a first recording layer 31 and a second recording layer 32 laminated with each other. A groove track 31A and a land track 31B are spirally formed on the first recording layer 31 and a groove track 32A and a land track 32B are spirally formed on the second recording layer 32. That is, each recording layer has a double-spiral structure in which information can be recorded on both the groove track and the land track.

The first recording layer 31 takes a spiral structure in the forward direction and the second recording layer 32 takes a spiral structure in the backward direction. Like the first to third embodiments, the forward direction and the backward direction of the spirals are determined for convenience' sake, and forward or backward of the spirals merely means that they are in the reverse direction to each other.

As shown in FIG. 6, the optical disk 400 is divided into three zones like the third embodiment. The groove track 31A of the first recording layer 31 is divided into a first zone 31Aa, a second zone 31Ab, and a third zone 31Ac. The land track 31B of the first recording layer 31 is divided into a first zone 31Ba, a second zone 31Bb, and a third zone 31Bc. The groove track 32A of the second recording layer 32 is divided into a first zone 32Aa, a second zone 32Ab, and a third zone 32Ac. The land track 32B of the second recording layer 32 is divided into a first zone 32Ba, a second zone 32Bb, and a third zone 32Bc.

The physical addresses of the first zone are allocated in the order of the first zone 31Aa of the groove track 31A of the first recording layer 31, the first zone 32Aa of the groove track 32A of the second recording layer 32, the first zone 31Ba of the land track 31B of the first recording layer 31, and the first zone 32Ba of the land track 32B of the second recording layer 32.

The physical addresses of the second zone are allocated in the order of the second zone 31Ab of the groove track 31A of the first recording layer 31, the second zone 32Ab of the groove track 32A of the second recording layer 32, the second zone 31Bb of the land track 31B of the first recording layer 31, and the second zone 32Bb of the land track 32B of the second recording layer 32.

The physical addresses of the third zone are allocated in the order of the third zone 31Ac of the groove track 31A of the first recording layer 31, the third zone 32Ac of the groove track 32A of the second recording layer 32, the third zone 31Bc of the land track 31B of the first recording layer 31, and the third zone 32Bc of the land track 32B of the second recording layer 32.

On each zone of the groove track 31A and the land track 31B of the first recording layer 31, information is recorded in the direction from the inner periphery of the optical disk 400 toward the outer periphery thereof. On each zone of the groove track 32A and the land track 32B of the second recording layer 32, information is recorded in the direction from the outer periphery of the optical disk 400 toward the inner periphery thereof.

Apparently by comparing FIG. 6 with FIG. 5, each of the first to third zones of the optical disk 400 is characterized in that their positions are shifted from each other radially of the optical disk 400 between the first recording layer 31 and the second recording layer 32.

More specifically, the first zone 32Aa of the groove track 32A and the first zone 32Ba of the land track 32B in the second recording layer 32 is located Δr nearer to the outer periphery of the optical disk 400 than the first zone 31Aa of the groove track 31A and the first zone 31Ba of the land track 31B in the first recording layer 31.

The second zone 32Ab of the groove track 32A and the second zone 32Bb of the land track 32B in the second recording layer 32 is located Δr nearer to the outer periphery of the optical disk 400 than the second zone 31Ab of the groove track 31A and the second zone 31Bb of the land track 31B in the first recording layer 31.

The third zone 32Ac of the groove track 32A and the third zone 32Bc of the land track 32B in the second recording layer 32 is located Δr nearer to the outer periphery of the optical disk 400 than the third zone 31Ac of the groove track 31A and the third zone 31Bc of the land track 31B in the first recording layer 31.

Next, a method for reading out information recorded on the optical disk 400 will be described.

The optical disk 400 is rotated in a certain direction. In this state, the pickup is moved from the inner periphery of the optical disk 400 toward the outer periphery thereof, thereby reading out information recorded on the first zone 31Aa of the groove track 31A, in a predetermined order. After this, the optical disk 400 is kept rotating in the same direction.

Next, the focus of the pickup is moved by a focus jump from the first recording layer 31 to the second recording layer 32. At this time, in the optical disk 400, since the outer periphery end of the first zone 32Aa of the groove track 32A is shifted to be Δr nearer to the outer periphery of the optical disk 400 than the outer periphery end of the first zone 31Aa of the groove track 31A, there is no possibility that the focus of the pickup erroneously moves to the second zone 32Ab upon the focus jump. Therefore, after this, by finely adjusting the pickup toward the outer periphery of the optical disk 400, information recorded on the first zone 32Aa of the groove track 32A can surely be read out. If the pickup has erroneously moved to the second zone 32Ab, to confirm the address in case that the second zone differs in regulated rotational speed from the first zone, the rotational speed must be controlled to the regulated value of the second zone. Thus the confirmation of the error requires a long time.

Next, the focus of the pickup is moved by a focus jump from the second recording layer 32 to the first recording layer 31 and the tracking polarity is switched. At this time, in the optical disk 400, since the inner periphery end of the first zone 31Ba of the land track 31B is shifted to be Δr nearer to the inner periphery of the optical disk 400 than the inner periphery end of the first zone 32Aa of the groove track 32A, there is no possibility that the focus of the pickup erroneously moves to the neighboring mirror surface 33 or lead-in area 34 upon the focus jump. Therefore, after this, by finely adjusting the pickup toward the inner periphery of the optical disk 400, information recorded on the first zone 31Ba of the land track 31B can surely be read out.

After information of the first zone of each track is read out as described above, the pickup is driven to be slid toward the outer periphery of the optical disk 400 and the focus of the pickup is moved by a focus jump from the second recording layer 22 to the first recording layer 21. After this, information recorded on the second zone and the third zone is read out by following the same procedure as that for the first zone. As described above, since the second zone and the third zone are shifted in position radially of the optical disk 400 between the first recording layer 31 and the second recording layer 32 like the first zone, when a focus jump is performed between the first recording layer 31 and the second recording layer 32, the focus of the pickup can surely be moved to the same zone without being erroneously moved to the neighboring zone.

As described above, information recorded on the groove tracks and the land tracks of the first recording layer 31 and the second recording layer 32 can be read out in the order of the physical addresses by the manner that the pickup is moved relatively to the disk and radially of the disk while the optical disk 400 is being rotated in the same direction. Besides, since the direction from the inner periphery of the optical disk 400 toward the outer periphery thereof and the direction from the outer periphery toward the inner periphery are repeated in the recording directions of the tracks in the order of the physical addresses, the pickup scarcely needs to be moved radially of the optical disk 400, and the read track can be switched by a focus jump. Besides, by determining the physical addresses so that the groove tracks or the land tracks are as continuous as possible, the number of times of switching the tracking polarity upon switching the read track can be reduced. Further, in this embodiment, since the locations of each zones of the first recording layer 31 and the second recording layer 32 are shifted from each other, the focus of the pickup can surely be moved to the predetermined same zone upon a focus jump.

Information to be recorded on the groove tracks and the land tracks of the first recording layer 31 and the second recording layer 32 can be recorded, e.g., in the order in accordance with the physical addresses, by relatively moving a recording head radially of the disk while the optical disk 400 is being rotated in the same direction.

FIG. 6 shows an example in which the optical disk is divided into three zones. But, the number of zones is not limited to this example. For example, the optical disk may be divided into several tens or a hundred or more zones.

### -Embodiment of Reproducing Apparatus-

An example of operation in case of reproducing the optical disk 400 shown as an optical recording medium of the third embodiment using the information recording/reproducing apparatus shown in FIG. 3 will be described below.

The optical disk 400 shown in FIG. 6 is rotated in a certain direction. In this state, the tracking actuator 56 is driven to move the focus of the pickup from the inner periphery end of the first zone toward the outer periphery end of the first zone, thereby reading out information of the first zone 31Aa of the groove track 31A.

Next, the focus of the pickup is moved by a focus jump from the first recording layer 31 to the second recording layer 32. At this time, in the optical disk 400, the zone boundary position is shifted radially by Δr between the first recording layer 31 and the second recording layer 32. Therefore, upon the focus jump to the first zone 32Aa of the groove track 32A at the end of the first zone 31Aa of the groove track 31A, since the outer periphery end of the first zone 32Aa is shifted by Δr toward the outer periphery relatively to the first zone 31Aa, surely focusing the same zone after the jump is possible. After this, the pickup is moved in the direction from the outer periphery of the optical disk 400 toward the inner periphery thereof, thereby reading out information of the first zone 32Aa of the groove track 32A.

Next, the focus of the pickup is moved by a focus jump from the second recording layer 32 to the first recording layer 31 and the tracking polarity is switched. At this time, in the optical disk 400, the zone boundary position is shifted radially by Δr between the second recording layer 32 and the first recording layer 31. Therefore, upon the focus jump to the first zone 31Ba of the land track 31B at the end of the first zone 32Aa of the groove track 32A, since the inner periphery end of the first zone 31Ba is shifted by Δr toward the inner periphery relatively to the first zone 32Aa, surely focusing the same zone after the jump is possible. After this, the pickup is moved in the direction from the inner periphery of the optical disk 400 toward the outer periphery thereof, thereby reading out information of the first zone 31Ba of the land track 31B.

Next, the focus of the pickup is moved by a focus jump from the first recording layer 31 to the second recording layer 32. At this time, in the optical disk 400, the zone boundary position is shifted radially by Δr between the first recording layer 31 and the second recording layer 32. Therefore, upon the focus jump to the first zone 32Ba of the land track 32B at the end of the first zone 31Ba of the land track 31B, since the outer periphery end of the first zone 32Ba is shifted by Δr toward the outer periphery relatively to the first zone 31Ba, surely focusing the same zone after the jump is possible. After this, the pickup is moved in the direction from the outer periphery of the optical disk 400 toward the inner periphery thereof, thereby reading out information of the first zone 32Ba of the land track 32B.

After information of the first zone of each track is read out as described above, the pickup is slid toward the outer periphery of the optical disk 400 and the focus of the pickup is moved by a focus jump from the second recording layer 32 to the first recording layer 31, and thereby information recorded on the second zone and the third zone is read out by following the same procedure as that for the first zone.

In general, in case that an optical disk is constructed by laminating a plurality of recording layers, because the accuracy in boding the recording layers is not so high, there is a possibility that the same zone to be located at the same position in relation to a radial direction of the optical disk may be shifted between the recording layers. If the position of the same zone is shifted, when a focus jump is performed without sliding the pickup, there is a possibility that the focus of the pickup may be moved to a neighboring zone or the like.

Contrastingly, in the reproducing apparatus of this embodiment, the pickup may be slid by a predetermined amount in the direction of the targeted zone upon a focus jump between the recording layers in the same zone. In this case, such an erroneous operation that the focus of the pickup is moved to the neighboring zone by the focus jump can be more certainly prevented.

## Claims

1. An optical recording medium having a plurality of recording layers of a double-spiral structure in which information is recorded on both of land tracks and groove tracks, wherein
a spiral of a first recording layer of said recording layers is in a forward direction,
a spiral of a second recording layer of said recording layers is in a backward direction, and
first information is recorded on one of a land track and a groove track of said first recording layer in the direction from an inner periphery toward an outer periphery of said optical recording medium, and second information subsequent to said first information is recorded on one of a land track and a groove track of said second recording layer in the direction from the outer periphery toward the inner periphery of said optical recording medium.

2. An optical recording medium having a plurality of recording layers of a double-spiral structure in which information is recorded on both of land tracks and groove tracks, wherein
a spiral of a first recording layer of said recording layers is in a forward direction,
a spiral of a second recording layer of said recording layers is in a backward direction, and
first information is recorded on one of a land track and a groove track of said first recording layer in the direction from an outer periphery toward an inner periphery of said optical recording medium, and second information subsequent to said first information is recorded on one of a land track and a groove track of said second recording layer in the direction from the inner periphery toward the outer periphery of said optical recording medium.

3. The optical recording medium according to claim 1 or 2, wherein third information subsequent to said second information is recorded on one of the land track and the groove track of said first recording layer on which said first information is not recorded, and fourth information subsequent to said third information is recorded on one of the land track and the groove track of said second recording layer on which said second information is not recorded.

4. The optical recording medium according to claim 1 or 2, wherein said first information is recorded on the land track of said first recording layer, and said second information is recorded on the land track of said second recording layer.

5. The optical recording medium according to claim 1 or 2, wherein said first information is recorded on the groove track of said first recording layer, and said second information is recorded on the groove track of said second recording layer.

6. The optical recording medium according to claim 1, wherein
either of said first recording layer and said second recording layer has been divided into N zones (zone 1 to zone N) from the inner periphery toward the outer periphery of said optical recording medium, and
first information is recorded on one of the land track and the groove track in zone n (n: a natural number not less than one and not more than N) of said first recording layer in the direction from the inner periphery toward the outer periphery of said optical recording medium, and second information subsequent to said first information is recorded on one of the land track and the groove track in zone n of said second recording layer in the direction from the outer periphery toward the inner periphery of said optical recording medium.

7. The optical recording medium according to claim 6, wherein an outer periphery end of zone n of said second recording layer is located nearer to the outer periphery of said optical recording medium than an outer periphery end of zone n of said first recording layer.

8. The optical recording medium according to claim 2, wherein
either of said first recording layer and said second recording layer has been divided into N zones (zone 1, zone 2, ..., zone N) from the inner periphery toward the outer periphery of said optical recording medium, and
first information is recorded on one of the land track and the groove track in zone n (n: a natural number not less than one and not more than N) of said first recording layer in the direction from the outer periphery toward the inner periphery of said optical recording medium, and second information subsequent to said first information is recorded on one of the land track and the groove track in zone n of said second recording layer in the direction from the inner periphery toward the outer periphery of said optical recording medium.

9. The optical recording medium according to claim 8, wherein an inner periphery end of zone n of said second recording layer is located nearer to the inner periphery of said optical recording medium than an inner periphery end of zone n of said first recording layer.

10. The optical recording medium according to claim 6 or 8, wherein said first information is recorded on the land track in zone n of said first recording layer, and said second information is recorded on the land track in zone n of said second recording layer.

11. The optical recording medium according to claim 6 or 8, wherein said first information is recorded on the groove track in zone n of said first recording layer, and said second information is recorded on the groove track in zone n of said second recording layer.

12. An optical recording medium having a plurality of recording layers of a double-spiral structure in which information is recorded on both of land tracks and groove tracks, wherein
at least a first recording layer, a second recording layer, a third recording layer, and a fourth recording layer are provided as said recording layers,
spirals of said first recording layer and said third recording layer are in a forward direction,
spirals of said second recording layer and said fourth recording layer are in a backward direction,
a first recording direction from an inner periphery toward an outer periphery of the optical recording medium and a second recording direction from the outer periphery toward the inner periphery of the optical recording medium are defined as the order of recording information,
the recording direction of said first recording layer and said third recording layer is one of said first recording direction and said second recording direction,
the recording direction of said second recording layer and said fourth recording layer is the other of said first recording direction and said second recording direction, and
physical addresses are allocated in the order of one of a land track and a groove track of said first recording layer, one of a land track and a groove track of said second recording layer, the other of the land track and the groove track of said first recording layer, the other of the land track and the groove track of said second recording layer, one of a land track and a groove track of said third recording layer, one of a land track and a groove track of said fourth recording layer, the other of the land track and the groove track of said third recording layer, and the other of the land track and the groove track of said fourth recording layer.

13. An information recording apparatus for recording information onto an optical recording medium having at least a first recording layer and a second recording layer of a double-spiral structure in which information is recorded on both of land tracks and groove tracks, wherein
a spiral of said first recording layer is in a forward direction,
a spiral of said second recording layer is in a backward direction,
a first recording direction from an inner periphery toward an outer periphery of the optical recording medium and a second recording direction from the outer periphery toward the inner periphery of the optical recording medium are defined as the order of recording information,
information is recorded in said first recording layer in one of said first recording direction and said second recording direction,
information is recorded in said second recording layer in the other of said first recording direction and said second recording direction, and
physical addresses for recording are allocated in the order of one of a land track and a groove track of said first recording layer, one of a land track and a groove track of said second recording layer, the other of the land track and the groove track of said first recording layer, and the other of the land track and the groove track of said second recording layer.

14. An information reproducing apparatus for reproducing information from an optical recording medium having at least a first recording layer and a second recording layer of a double-spiral structure in which information is recorded on both of land tracks and groove tracks, wherein
a spiral of said first recording layer is in a forward direction,
a spiral of said second recording layer is in a backward direction,
a first reproducing direction from an inner periphery toward an outer periphery of the optical recording medium and a second reproducing direction from the outer periphery toward the inner periphery of the optical recording medium are defined as the order of reproducing information,
information is reproduced from said first recording layer in one of said first reproducing direction and said second reproducing direction,
information is reproduced from said second recording layer in the other of said first reproducing direction and said second reproducing direction, and
information is reproduced following physical addresses allocated in the order of one of a land track and a groove track of said first recording layer, one of a land track and a groove track of said second recording layer, the other of the land track and the groove track of said first recording layer, and the other of the land track and the groove track of said second recording layer.

15. An information reproducing apparatus for reproducing information from an optical recording medium having at least a first recording layer and a second recording layer of a double-spiral structure in which information is recorded on both of land tracks and groove tracks, wherein
a spiral of said first recording layer is in a forward direction,
a spiral of said second recording layer is in a backward direction,
information has been recorded in said first recording layer in the direction from an inner periphery toward an outer periphery of said optical recording medium,
information has been recorded in said second recording layer in the direction from the outer periphery toward the inner periphery of said optical recording medium,
either of said first recording layer and said second recording layer has been divided into N zones (zone 1 to zone N) from the inner periphery toward the outer periphery of said optical recording medium,
first information has been recorded on one of a land track and a groove track in zone n (n: a natural number not less than one and not more than N) of said first recording layer, and second information subsequent to said first information has been recorded on one of a land track and a groove track in zone n of said second recording layer, and
a driving device is provided for driving a pickup so that said first information is reproduced following physical addresses, the focus of said pickup is slid by a predetermined amount in the direction toward the inner periphery of said optical recording medium with a focus jump from said first recording layer to said second recording layer, and then said second information is reproduced following physical addresses.

16. An information reproducing apparatus for reproducing information from an optical recording medium having at least a first recording layer and a second recording layer of a double-spiral structure in which information is recorded on both of land tracks and groove tracks, wherein
a spiral of said first recording layer is in a forward direction,
a spiral of said second recording layer is in a backward direction,
information has been recorded in said first recording layer in the direction from an outer periphery toward an inner periphery of said optical recording medium,
information has been recorded in said second recording layer in the direction from the inner periphery toward the outer periphery of said optical recording medium,
either of said first recording layer and said second recording layer has been divided into N zones (zone 1 to zone N) from the inner periphery toward the outer periphery of said optical recording medium,
first information has been recorded on one of a land track and a groove track in zone n (n: a natural number not less than one and not more than N) of said first recording layer, and second information subsequent to said first information has been recorded on one of a land track and a groove track in zone n of said second recording layer, and
a driving device is provided for driving a pickup so that said first information is reproduced following physical addresses, the focus of said pickup is slid by a predetermined amount in the direction toward the outer periphery of said optical recording medium with a focus jump from said first recording layer to said second recording layer, and then said second information is reproduced following physical addresses.
